# EUROPÄISCHE PATENTSCHRIFT

(11) **EP 0 820 904 B1**
(45) Veröffentlichungstag und Bekanntmachung des Hinweises auf die Patenterteilung: **17.10.2001**
(21) Anmeldenummer: 97111756.9
(22) Anmeldetag: 10.07.1997
(51) Int. Cl.: B60R 21/16

(54) **Verfahren zur Herstellung eines Gassacks für ein Fahrzeuginsassen-Rückhaltesystem sowie Gassack**
Method to manufacture an air bag for a passenger restraint system and air bag
Procédé de fabrication d'un coussin gonflable pour un système de retenue de passager et coussin gonflable

(30) Priorität: 23.07.1996 DE 19629759
(43) Veröffentlichungstag der Anmeldung: 28.01.1998
(73) Patentinhaber: TRW Occupant Restraint Systems GmbH & Co. KG, 73551 Alfdorf (DE)
(72) Erfinder: Berger, Jürgen, 73557 Mutlangen (DE)
(74) Vertreter: Degwert, Hartmut, Dipl.-Phys.

(56) Entgegenhaltungen:
- DE-A- 2 160 959
- DE-U- 9 013 827
- US-A- 3 810 654

## Beschreibung

Die Erfindung betrifft ein Verfahren zur Herstellung eines Gassacks für ein Fahrzeuginsassen-Rückhaltesystem, bei dem übereinanderliegende Randbereiche von Gewebeteilen miteinander vernäht werden, und einen Gassack für ein Fahrzeuginsassen-Rückhaltesystem, bei dem übereinanderliegende Randbereiche von Gewebeteilen miteinander vernäht sind.

Wenn bei der Herstellung von Gassäcken mehrere Gewebeteile an der Außenseite des Gassacks miteinander vernäht werden, entstehen eine abstehende Naht und abstehende Gewebekanten, von denen aufgrund ihrer relativen Härte oder Steifigkeit eine Gefährdung für den Insassen ausgehen kann. Daher wird gewöhnlich die Naht im Inneren des Gassacks angeordnet. Dies wird erreicht, indem der Gassack durch die Einblasöffnung umgestülpt wird. Eine andere Möglichkeit besteht darin, die Naht flach auszubilden, so daß sie am Umfang des aufgeblasenen Gassacks anliegt. Diese Lösung erfordert aber eine aufwendige Nähtechnik, da die Nähvorrichtung durch die Einblasöffnung hindurch in den Gassack eingreifen muß, damit die Naht an der Innenseite oder zwischen der Außenseite und der Innenseite des Gassacks gebildet werden kann.

In der gattungsgemäßen US 3 810 654 ist ein Verfahren zur Herstellung eines Gassacks beschrieben, bei dem ein rechteckiges Gewebestück zusammengeklappt und an den Seitenrändern vernäht wird. Die so entstandene Tasche wird anschließend durch Falten und Abnäher in die gewünschte Form gebracht. Danach wird der Gassack umgestülpt, damit die gebildeten Nähte und Abnäher im Inneren des Gassacks zu liegen kommen. Die zum Umstülpen verwendete Öffnung im Bereich der Einblasöffnung wird abschließend von außen vernäht.

Im Gegensatz dazu ist bei einem erfindungsgemäßen Verfahren der eingangs genannten Art vorgesehen, daß in einem ersten Schritt eine Naht entlang einem wesentlichen Teil der Randbereiche an der Innenseite oder zwischen der Innenseite und der Außenseite des Gassacks ausgeführt wird und in einem zweiten Schritt der verbleibende Teil der Randbereiche durch eine nur von außen ausgeführte Naht verschlossen wird, ohne daß der Gassack umgestülpt wird. Gemäß der Erfindung ist bei einem Gassack der eingangs genannten Art vorgesehen, daß entlang demjenigen Teil der Randbereiche, der bei aufgeblasenem Gassack dem Insassen zugewandt ist, eine von der Innenseite oder zwischen der Innenseite und der Außenseite des Gassacks ausgeführte Naht angeordnet und der verbleibende Teil der Randbereiche durch eine nur von außen ausgeführte Naht verschlossen ist. Bei einem erfindungsgemäßen Verfahren ist also weder ein Umstülpen des Gassacks durch die Einblasöffnung noch ein Nähen durch die Einblasöffnung hindurch notwendig. Dies ist insbesondere bedeutsam, da bedingt durch die Entwicklung von immer kompakteren Fahrzeuginsassen-Rückhaltesystemen die Einblasöffnung für den Gassack zunehmend kleiner ausgebildet wird.

Die Erfindung wird nachfolgend unter Bezugnahme auf eine bevorzugte Ausführungsform beschrieben, die in der beigefügten Zeichnung dargestellt ist. In dieser zeigen:
- Figur 1 in einer schematischen Draufsicht zwei Gewebeteile, die mit einem erfindungsgemäßen Verfahren zu einem erfindungsgemäßen Gassack verbunden werden können;
- Figur 2 in einem schematischen Querschnitt einen durch ein erfindungsgemäßes Verfahren hergestellten erfindungsgemäßen Gassack;
- Figur 3 in einem schematischen Querschnitt eine an der Innenseite des Gassacks ausgeführte Naht zum Verbinden der in Figur 1 dargestellten Gewebeteile; und
- Figur 4 in einem schematischen Querschnitt eine zwischen der Innenseite und der Außenseite des Gassacks ausgeführte Naht zum Verbinden der in Figur 1 dargestellten Gewebeteile.

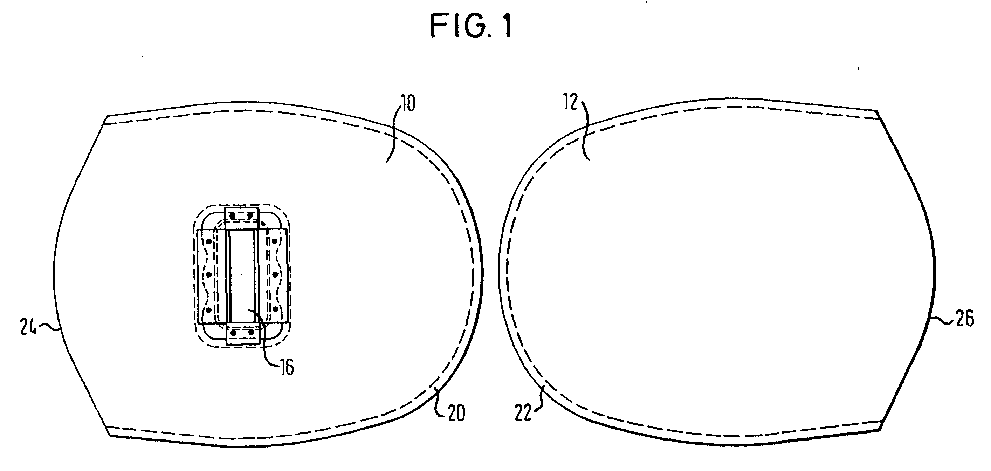

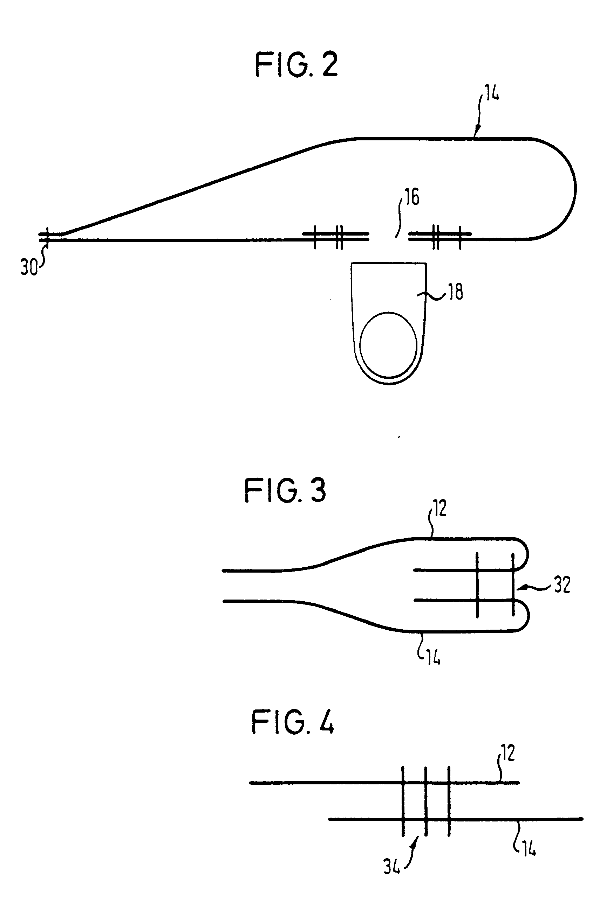

In Figur 1 sind in einer schematischen Draufsicht zwei Gewebeteile 10 und 12 dargestellt, die durch Vernähen ihrer Randbereiche zu einem Gassack 14 verbunden werden können. Ein solcher Gassack ist in Figur 2 in einem schematischen Querschnitt dargestellt ist, wobei bei der in Figur 2 gezeigten Ausführungsform die beiden Gewebeteile einteilig ausgeführt sind, indem die Abschnitte, die in der Ausführungsform von Figur 1 einander zugewandt sind, miteinander verbunden sind. Der Gassack 14 weist eine Einblasöffnung 16 auf, über die der Innenraum des Gassacks von einem Gasgenerator 18 (Figur 2) befüllt werden kann.

Die beiden Gewebeteile 10, 12 werden miteinander verbunden, indem in einem ersten Schritt ein wesentlicher Teil der Randbereiche des Gassacks miteinander vernäht wird. Bei der in der Zeichnung dargestellten Ausführungsform wird der erste Schritt entlang dem mit den Bezugszeichen 20 und 22 bezeichneten Teil der Randbereiche ausgeführt. Der Teil 20, 22 der Randbereiche kann entweder an der Innenseite des Gassacks 14 oder zwischen der Innenseite und der Außenseite des Gassacks 14 vernäht werden.

Wenn der Teil 20, 22 der Randbereiche an der Innenseite des Gassacks 14 miteinander vernäht wird, ergibt sich eine Naht 32, wie sie in Figur 3 dargestellt ist. Die Randbereiche wurden vor dem Vernähen gleichsinnig aufeinandergelegt, also mit zusammenfallenden Außenrändern. Diese Art der Verbindung hat den Vorteil, daß sich sowohl die Naht 32 als auch die Außenränder der Gewebeteile 10, 12 vollständig im Innenraum des Gassacks befinden.

Wenn der Teil 20, 22 der Randbereiche dagegen zwischen der Innenseite und der Außenseite des Gassacks 14 miteinander vernäht wird, ergibt sich eine Naht 34, wie sie in Figur 4 dargestellt ist. Die Randbereiche wurden vor dem Vernähen gegensinnig aufeinandergelegt; jeder Außenrand eines Gewebeteils liegt also auf dem anderen Gewebeteil. Diese Art der Verbindung hat den Vorteil, daß sich eine sehr belastbare Naht ergibt, ohne daß die Außenränder der Gewebeteile 10, 12 nach außen abstehen.

In einem zweiten Schritt wird dann der verbleibende Teil der Randbereiche durch eine nur von außen ausgeführte Naht 30 verschlossen. Bei der in der Zeichnung dargestellten Ausführungsform ist dies der mit den Bezugszeichen 24 und 26 bezeichnete Teil der Randbereiche. Diese werden zum Vernähen gleichsinnig aufeinandergelegt.

Die von der Innenseite des Gassacks 14 ausgeführte Naht 32 oder die zwischen der Innenseite und der Außenseite ausgeführte Naht 34 ist bei in ein Fahrzeug eingebautem und entfaltetem Gassack einem zu schützenden Fahrzeuginsassen zugewandt, da sich aufgrund ihrer Gestaltung keine Gefährdung für einen Fahrzeuginsassen ergeben kann. Dagegen ist die nur von außen ausgeführte Naht 30 von dem Fahrzeuginsassen abgewandt, also beispielsweise der Windschutzscheibe oder dem Armaturenbrett zugewandt, so daß die nach außen abstehenden Außenränder der Gewebeteile 10, 12 im Bereich der Naht 30 sowie die Naht selbst nicht stören.

Da bei dem erfindungsgemäßen Verfahren weder ein Vernähen durch die Einblasöffnung hindurch noch ein Umstülpen des Gassacks durch die Einblasöffnung erfolgt, können bei dem erfindungsgemäßen Verfahren die Nähte ohne Rücksicht auf von der Einblasöffnung gebildete räumliche Beschränkung gestaltet werden. Beispielsweise können die Nähte mit einer größeren Festigkeit gebildet werden. Es ist ferner möglich, bei dem ersten und dem zweiten Schritt unterschiedliche Nähte zu verwenden, die speziell an die jeweils vorliegenden Anforderungen in dem entsprechenden Randbereich angepaßt sind.

## Patentansprüche

1. Verfahren zur Herstellung eines Gassacks (14) für ein Fahrzeuginsassen-Rückhaltesystem, bei dem übereinanderliegende Randbereiche von Gewebeteilen (10, 12) miteinander vernäht werden, **dadurch gekennzeichnet, daß** in einem ersten Schritt eine Naht entlang einem wesentlichen Teil (20, 22) der Randbereiche an der Innenseite oder zwischen der Innenseite und der Außenseite des Gassacks (14) ausgeführt wird und in einem zweiten Schritt der verbleibende Teil (24, 26) der Randbereiche durch eine nur von außen ausgeführte Naht verschlossen wird, ohne daß der Gassack umgestülpt wird.

2. Verfahren nach Anspruch 1, **dadurch gekennzeichnet, daß** in dem ersten Schritt die Randbereiche (20, 22) gleichsinnig übereinanderliegend miteinander vernäht werden.

3. Verfahren nach Anspruch 1, **dadurch gekennzeichnet, daß** in dem ersten Schritt die Randbereiche (20, 22) gegensinnig übereinanderliegend miteinander vernäht werden.

4. Verfahren nach einem der vorhergehenden Ansprüche, **dadurch gekennzeichnet, daß** in dem zweiten Schrit die Randbereiche (24, 26) gleichsinnig übereinanderliegend miteinander vernäht werden.

5. Gassack (14) für ein Fahrzeuginsassen-Rückhaltesystem, bei dem übereinanderliegende Randbereiche von zwei Gewebeteilen (10, 12) miteinander vernäht sind, **dadurch gekennzeichnet, daß** entlang demjenigen Teil (20, 22) der Randbereiche, der bei aufgeblasenem Gassack dem Insassen zugewandt ist, eine von der Innenseite oder zwischen der Innenseite und der Außenseite des Gassacks ausgeführte Naht (32; 34) angeordnet und der verbleibende Teil (24, 26) der Randbereiche durch eine nur von außen ausgeführte Naht (30) verschlossen ist.

## Claims

1. A method of fabricating a gas bag (14) for a vehicular occupant restraint system, in which superimposed margins of fabric portions (10, 12) are stitched to each other, **characterized in that** in a first step a seam is formed along a substantial portion (20, 22) of the margins at the inner side of the gas bag (14) or between the inner side and outer side thereof and in a second step the remaining portion (24, 26) of the margins is closed by a seam formed only from the outer side, and without the gas bag being turned inside out.

2. The method as set forth in claim 1, **characterized in that** in the first step the margins (20, 22) are stitched to each other, being superimposed in the same sense.

3. The method as set forth in claim 1, **characterized in that** in the first step the margins (20, 22) are stitched to each other, being superimposed in the opposite sense.

4. The method as set forth in any of the preceding claims, **characterized in that** in the second step the margins (24, 26) are stitched to each other, being superimposed in the same sense.

5. A gas bag (14) for a vehicular occupant restraint system, in which superimposed margins of two fabric portions (10, 12) are stitched to each other, **characterized in that** along the portion (20, 22) of the margins which faces the occupant when the gas bag is deployed, a seam (32; 34) is disposed which is formed from the inner side or between the inner side and the outer side of the gas bag, and the remaining portion (24, 26) of the margins is closed by a seam (30) formed only from the outer side.

## Revendications

1. Procédé de fabrication d'un coussin à gaz (14) pour un système de retenue des occupants d'un véhicule, dans lequel des zones de bord superposées de morceaux de tissu (10,12) sont cousues l'une à l'autre, **caractérisé en ce que**, dans une première étape; une couture est réalisée le long de la majeure partie (20, 22) des zones de bord sur la face intérieure ou entre la face intérieure et la face extérieure du coussin à gaz (14) et, dans une seconde étape, la partie restante (24, 26) des zones de bord est fermée par une couture réalisée uniquement de l'extérieur sans que le coussin à gaz soit retourné.

2. Procédé selon la revendication 1, **caractérisé en ce que**, dans la première étape, les zones de bord (20, 22) sont cousues l'une à l'autre en étant superposées dans le même sens.

3. Procédé selon la revendication 1, **caractérisé en ce que**, dans la première étape, les zones de bord (20, 22) sont cousues l'une à l'autre en étant superposées dans des sens opposés.

4. Procédé selon l'une des revendications précédentes, **caractérisé en ce que**, dans la seconde étape, les zones de bord (24, 26) sont cousues l'une à l'autre en étant superposées dans le même sens.

5. Coussin à gaz (14) pour un système de retenue des occupants d'un véhicule, dans lequel des zones de bord superposées de deux morceaux de tissu (10,12) sont cousues l'une à l'autre, **caractérisé en ce que**, le long de la partie (20, 22) des zones de bord, qui est tournée vers l'occupant lorsque le coussin à gaz est gonflé, est disposée une couture (32; 34) réalisée sur la face intérieure et la face extérieure du coussin à gaz, et la partie restante (24, 26) des zones de bord est fermée par une couture (30) réalisée uniquement de l'extérieur
